Europäisches Patentamt

**European Patent Office**

Office européen des brevets

(19)

(11) Veröffentlichungsnummer: **0 063 232**
**B2**

(12) # NEUE EUROPÄISCHE PATENTSCHRIFT

(45) Veröffentlichungstag der neuen Patentschrift:
**13.09.89**

(51) Int. Cl.⁴: **C 04 B 28/16,** C 04 B 11/06,
E 04 F 15/12

(21) Anmeldenummer: **82101792.8**

(22) Anmeldetag: **06.03.82**

(54) Selbstnivellierende Mörtelmischung.

(30) Priorität: **22.04.81 DE 3115979**

(43) Veröffentlichungstag der Anmeldung:
**27.10.82 Patentblatt 82/43**

(45) Bekanntmachung des Hinweises auf die Patenterteilung:
**14.11.84 Patentblatt 84/46**

(45) Bekanntmachung des Hinweises auf die Entscheidung über den Einspruch:
**13.09.89 Patentblatt 89/37**

(84) Benannte Vertragsstaaten:
**AT BE CH FR IT LI NL**

(56) Entgegenhaltungen:
**DE-A-2 264 075**
**DE-A-2 351 084**
**DE-A-2 801 163**
**DE-B-1 018 775**
**DE-B-1 077 130**
**DE-B-2 102 456**
**DE-B-2 264 075**
**DE-C-586 331**
**DE-C-814 421**
**DE-C-864 677**
**DE-C-901 390**
**DE-C-951 436**
**DE-C-1 005 433**
**GB-A-569 596**

**DIN 1164, Teil 7, Seite 1**

(73) Patentinhaber: **Gebr. Knauf Westdeutsche Gipswerke, Am Bahnhof 6, D-8715 Iphofen (DE)**

(72) Erfinder: **Bold, Jörg, Am Hösberg 6, D-6639 Rehlingen (DE)**
Erfinder: **Irsch, Hans-Peter, Marsweg 1, D-6620 Völklingen (DE)**
Erfinder: **Poch, Wingolf, Dr., Wiesenweg 5, D-8710 Kitzingen (DE)**
Erfinder: **Khoda, Feridun, Dr., Otto-Richter-Strasse 1, D-8700 Würzburg (DE)**
Erfinder: **Zenner, Herbert, verstorben, D-6639 Rehlingen-Siersburg (DE)**

(74) Vertreter: **Böhme, Volker, Dr., Patentanwälte Dr. Böhme, Kessel, Böhme Karolinenstrasse 27, D-8500 Nürnberg (DE)**

EP 0 063 232 B2

## Beschreibung

Die Erfindung betrifft eine selbstnivellierende Mörtelmischung enthaltend ein Magerungsmittel, synthetischen Anhydrit, Zement, Calciumsulfathalbhydrat als Bindemittel, Anregersalz, Verflüssiger und Wasser.

Bei einer bekannten (DE-A-2 264 075) Mörtelmischung dieser Art ist als Magerungsmittel Sand vorgesehen und wird der Trockensubstanz relativ wenig Wasser zugemischt. Dabei wird relativ viel Verflüssiger zugesetzt. Das Verhältnis von synthetischem Anhydrit zu Calciumsulfathalbhydrat ist nicht näher definiert, und der Zementanteil macht etwa die Hälfte der Summe der Anteile an synthetischen Anhydrit und Calciumsulfathalbhydrat aus. Das selbstnivellierende Fließverhalten dieser Mörtelmischung ist günstig und zufriedenstellend; jedoch ist die Festigkeit in vielen Anwendungsfällen zu niedrig, d.h. in vielen Fällen ist weder die Frühfestigkeit noch die Endfestigkeit des aushärtenden bzw. ausgehärteten Estrichs zufriedenstellend.

Es ist auch eine selbstnivellierende Mörtelmischung zur Herstellung von Platten in Formen bekannt (DE-A-2 801 163), die Anhydrit, Gips, Anregersalz, Verflüssiger, Granulatzuschläge und Wasser enthält, wobei der Anhydrit natürlicher oder synthetischer Anhydrit sein kann. Jedoch dient der Anhydrit hier nur als Bindemittel. Werden die Granulatzuschläge als Magerungsmittel in ausreichender Menge zugesetzt, dann sind die Festigkeitseigenschaften der ausgehärteten Mischung von diesen Granulatzuschlägen bestimmt und für einen Estrich ebenfalls unbefriedigend.

Eine Aufgabe der Erfindung ist es somit, eine Mörtelmischung der eingangs genannten Art zu schaffen, die unter Beibehaltung des guten selbstnivellierenden Fließverhaltens verbesserte Festigkeitseigenschaften aufweist. Die erfindungsgemässe Mörtelmischung ist, diese Aufgabe lösend, dadurch gekennzeichnet, dass die Mörtelmischung zu 67 bis 80 % natürlichen Anhydrit mit normaler Kornverteilung und einem Maximalkorn zwischen 0,8 und 1,8 mm als Magerungsmittel enthält, wobei 10 bis 20 % synthetischer Anhydrit, 4 bis 7 % Zement, 3 bis 7 % $\alpha$-Calciumsulfathalbhydrat, 0,4 bis 0,8 % Anregersalz, 0,01 bis 0,2 % Verflüssiger vorgesehen sind und ein Wasser/Feststoff-Verhältnis 0,13 : 0,2 eingestellt ist.

Die erfindungsgemässe Mörtelmischung weist (im Vergleich mit der DE-A-2 264 075) bei Verarbeitung als Estrich nicht nur gute selbstnivellierende Fließeigenschaften sondern auch verbesserte Festigkeitseigenschaften auf. Die höhere Festigkeit beruht auf der Art Verwandtschaft des als Magerungsmittel verwendeten natürlichen Anhydrits mit dem als Bindemittel vorgesehen synthetischen Anhydrit. Selbst wenn der verwendete natürliche Anhydrit bei der Vermahlung eine ungünstige Kornform liefert, so führt dies jedoch nicht zu einer wesentlichen Verschlechterung der Festigkeitseigenschaften wie sonst bei Mörtelmischungen, da ein aktives Magerungsmittel vorgesehen ist. Ein gutes Fließverhalten wird trotz des vorgesehen geringen Verflüssigeranteils erreicht. Für die verbesserten Festigkeitseigenschaften sind der erhöhte Anteil an Anreger, das ausgewogene Verhältnis von synthetischem Anhydrit zu Calciumsulfathalbhydrat und der in bezug auf die Summe von synthetischem Anhydrit, Zement und Calciumsulfathalbhydrat verringerte Zementanteil von Bedeutung.

Ein Produkt aus der erfindungsgemässen Mörtelmischung besitzt bessere Schleifbarkeit, geringeren Zementanteil, keine organischen Bindehilfsmittel und eine erhöhte Raumbeständigkeit. Es liegt bei der erfindungsgemässen Mörtelmischung auch eine wesentlich steilere Festigkeitsentwicklung vor.

Dadurch, dass anstelle von Sand natürlicher Anhydrit als Magerungsmittel in der anmeldungsgemässen Mörtelmischung verwendet wird, erhöhen sich die Festigkeiten. Besondere Maßnahmen zur Verbesserung der Fließfähigkeit durch diesen Austausch Anhydrit gegen Sand sind nicht erforderlich. Auch bei sandhaltigen Mörtelmischungen müssen verflüssigend wirkende Stoffe beigegeben werden, um bei niedrigem Wasser/Feststoff-Verhältnis eine Fließfähigkeit des Mörtels zu erzielen.

Die Verwendung von purem natürlichen Anhydrit für Mörtelmassen im allgemeinen und speziell für Estrich ist lange bekannt, konnte sich aber nicht durchsetzen. Bei der Salzanregung war stets mit Schäden durch Wassereinfluß zu rechnen, bei der gemischten Anregung durch Salz und Kalk bzw. Zement konnten nur geringe Festigkeiten erreicht werden. Dies ist erfindungsgemäss vermieden. Andererseits ist naturlicher Anhydrit, wenn er nur gebrochen und auf geringe Feinheit vermahlen wird, stets preiswerter als synthetischer Anhydrit oder $\alpha$-HH, die getrocknet, neutralisiert und gemahlen werden müssen. In manchen Fällen ist der natürliche Anhydrit sogar billiger als gewaschener, getrockneter und gesiebter Sand. Bei der erfindungsgemässen Mörtelmischung sind jedoch positive Eigenschaften von Massen aus z. B. synthetischem Anhydrit, $\alpha$-Gips oder Zement miteinbezogen worden, welche hauptsächlich sind: relativ hohe Plastizität bei der Verarbeitung, relativ schnelles Ansteifen, Wasserfestigkeit.

Der natürliche Anhydrit liegt in normaler Kornverteilung mit einem Maximalkorn zwischen 0,8 und 1,8 mm, vorzugsweise 1,0 bis 1,5 mm vor. Der synthetische Anhydrit mit einer spezifischen Oberfläche von 4000 bis 6000 cm$^2$/g ist z. B. unter der Bezeichnung AB im Handel erhältlich. Als Zement eignen sich Portlandzemente, Eisenportlandzemente und Hochofenschlackenzemente höherer Feinheit z. B. PZ 35 F, PZ 45, EPZ 45, HOZ 45. Der $\alpha$-HH soll vorzugsweise eine spezifische Oberfläche $\leqslant$ 3000 cm$^2$/g besitzen, ist jedoch nicht darauf beschränkt.

Als Anregersalz wird vorzugsweise K$_2$SO$_4$ verwendet, jedoch können auch andere bekannte

Salze wie $Al_2(SO_4)_3$, $KAl(SO_4)_2$, $ZnSO_4$, Kalium-pyrosulfat und andere verwendet werden. Natriumsalze sind weniger empfehlenswert, da sie zu Ausblühungen führen. Die Menge des Anregers wird so bestimmt, dass bei vorgegebener Zusatzmenge von Zement die Abbindedehnung minimal ist, jedoch nicht unter Null fällt. In der Regel liegt diese Menge nahe 10 % der Zementmenge. Weicht man zu stark von dieser Regel ab, so treten Dehnungsspannungen oder Schrumpfrisse auf.

Als Verflüssiger wurden handelsübliche Ligninsulfonate bevorzugt eingesetzt. Die bekannten, modifizierten Melaminharze und andere sind ebenfalls einsetzbar. Mörtel, bei denen der Wasseranteil zu stark reduziert ist, setzen jedoch den Pumpen durch Förderleitungen großen Widerstand entgegen. Die Menge an Verflüssiger wird so eingestellt, dass bei einem Wasserfaktor von 0,15 bis 0,2 ein freifließender Mörtel entsteht. Die Verflüssigermenge ist optimal eingestellt, wenn bei einem Wasserfaktor von 0,17 ein Fliessmass von 21 cm erreicht wird.

Vorteilhaft ist es, wenn von 0 bis 2 % Tonerdeschmelzzement zugemischt sind. Hierdurch wird eine besonders hohe Frühfestigkeit erreicht.

Besonders zweckmässig und vorteilhaft ist es auch, wenn von 0,001 bis 0,05 % Verzögerer zugemischt sind. Der Verzögerer wird beim Begießen größerer Flächen verwendet, um ein zu schnelles Abbinden des $\alpha$-HH zu verhindern. Der Verzögerer wird aus den bekannten Verzögerern aus der Gipstechnologie ausgewählt, bevorzugt werden hydrolysierte Proteine oder Polycarbonsäuren. Die Menge wird so eingestellt, dass ein Abbindebeginn der Estrichmischung, gemessen nach DIN 1 168, von 60 bis 150 min eintritt. Die Verzögerermenge ist in der Regel so gewählt, dass bei einem Fliessmass von 21 cm ein Abbindebeginn von 80 bis 120 min eingestellt ist.

Besonders zweckmässig und vorteilhaft ist es weiterhin, wenn 0,001 bis 0,01 % Antischaummittel zugemischt sind. Das Antischaummittel wird zugesetzt, wenn Zusätze gewählt werden, die schaumbildende Wirkung besitzen. Das Antischaummittel soll die Bildung von Blasen an der Oberfläche des Estrichs verhindern, welche zu Vertiefungen in der erhärteten Oberfläche führen. Die Menge richtet sich nach Art und Wirksamkeit.

Besonders zweckmässig und vorteilhaft ist es sodann, wenn das Mengenverhältnis Zement zu Anregersalz von 8 bis 12 beträgt. Hierbei ist das Mengenverhältnis so eingestellt, dass die Abbindedehnungsmöglichkeit gering, aber nicht kleiner als Null ist.

Ohne Einschränkung des Erfindungsgedankens können zur weiteren Verbesserung oder für bestimmte Sonderforderungen die sonstigen bekannten Stellmittel zugegeben werden. Die Eigenschaften eines nach den obigen Vorschriften hergestellten Mörtels sind folgende: Die trockene Mörtelmischung ist vollständig; an der Baustelle muß nur Wasser zugegeben werden.

Die trockene Mörtelmischung eignet sich zur pneumatischen Förderung und zum Anmachen in den üblichen kontinuierlichen und diskontinuierlichen Mörtelmischern. Die mit Wasser gemischte flüssige Mörtelmischung ist über wenigstens 50 m pumpbar und fließt am Ort der Einbringung zu einer ebenen Fläche auseinander.

Verbundestriche und schwimmende Estriche können fugenlos verlegt werden, da keine Dehnung und Schwindung auftritt. Bei Verwendung über Fußbodenheizungen empfiehlt sich dennoch, die üblichen Trennschnitte an den Stellen geringster Länge in der Estrichfläche anzubringen. Die Estrichfläche ist nach spätestens 24 h begehbar. Die Austrocknung ist je nach Trocknungsbedingungen nach 14 bis 28 d abgeschlossen.

**Beispiel**

Ein Mörtel aus

| | |
|---|---|
| 70,98 % | natürlichem Anhydrit 0 bis 1,25 mm |
| 18 % | synthetischem Anhydrit (spez. Oberfläche = 5100 $cm^2/g$) |
| 5 % | $\alpha$-HH (spez. Oberfläche 2100 $cm^2/g$) |
| 5,5 % | PZ 35 F |
| 0,5 % | $K_2SO_4$ |
| 0,01 % | Verflüssiger (Ligninsulfonat) |
| 0,001% | Entschäumer (Silikon) |
| 0,005% | Verzögerer (Zitronensäure) |

wird mit 17 Teilen Wasser angerührt.

Der Mörtel hat ein Ausbreitmass von 21 cm. In Prismenform der Masse 4 x 4 x 16 cm gegossen, mißt man folgende Festigkeiten bei Lagerung Normalklima 20/65, DIN 50 014:

| | 1 d | 3 d | 7 d | 28 d |
|---|---|---|---|---|
| Biegezug ($N/mm^2$) | 1,4 | 4,1 | 7,3 | 8,4 |
| Druck ($N/mm^2$) | 4,7 | 22,2 | 36,8 | 37,2 |

In diesem Beispiel ist kein Tonerdeschmelzzement enthalten. Der beigegebene Verzögerer und das Antischaummittel beeinflussen die Festigkeiten unwesentlich. Tendenzmässig sinken die Festigkeitswerte durch die zugegebenen Hilfsmittel ab. Die Verschiebung der Werte liegt jedoch im Streubereich der Einzelmessungen.

Eine Mörtelmischung gemäss DE-A-2 264 075 mit Einzelkomponenten im mittleren Bereich der angegebenen Anteiligkeiten (Sand 0 bis 8 mm = 65 %; Portlandzement 8 %; Gips- Rohstein 0,2 mm = 17,75 %; Kreide 9,3 %; Dispersionspulver 0,45 %; Casein 0,3 %; PVAI 0,07 %; Natriumsulfat 0,07 %) benötigt für einen Mörtel mit dem Fliessmass von 21 cm einen Wasser/Feststoff-Verhältnis von 0,20. Mit diesem Mörtel wird eine 24 h Druckfestigkeit (feucht) von 1,4 $MN/m^2$ erreicht, während ein erfindungsgemässer Mörtel bei einem Wasser/Feststoff-Verhältnis von 0,17 eine 24 h Druckfestigkeit (feucht) von 4,7 M N/m² bringt.

Die Prozentangaben in der vorliegenden Anmeldung bedeuten stets Gewichtsprozente. Durch die vorliegende Anmeldung soll nicht nur die erfindungsgemässe Mörtelmischung sondern auch ein daraus hergestellter Estrich unter Schutz gestellt sein.

## Patentansprüche

1. Selbstnivellierende Mörtelmischung enthaltend ein Magerungsmittel, synthetischen Anhydrit, Zement, Calciumsulfathalbhydrat als Bindemittel, Anregersalz, Verflüssiger und Wasser, dadurch gekennzeichnet, dass sie zu 67 bis 80 % natürlichen Anhydrit mit normaler Kornverteilung ab 0 mm und einem Maximalkorn zwischen 0,8 und 1,8 mm als Magerungsmittel enthält, wobei 10 bis 20 % synthetischer Anhydrit, 4 bis 7 % Zement, 3 bis 7 % α-Calciumsulfathalbhydrat, 0,4 bis 0,8 % Kaliumsulfat als Anregersalz, 0,01 bis 0,2 % Verflüssiger vorgesehen sind und ein Wasser/Feststoff-Verhältnis 0,13 : 0,2 eingestellt ist, wobei das Gewichtsverhältnis Zement /Kaliumsulfat von 5 - 17,5 beträgt und die Prozentangaben Gewichtsprozente bedeuten und sich auf den Feststoffgehalt beziehen.

2. Mörtelmischung nach Anspruch 1, dadurch gekennzeichnet, dass das Maximalkorn des naturlichen Anhydrits von 1,0 bis 1,4 mm beträgt.

3. Mörtelmischung nach einem der beiden Ansprüche 1 oder 2, dadurch gekennzeichnet, dass der synthetische Anhydrit eine spezifische Oberfläche von 4000 bis 6000 cm²/g besitzt.

4. Mörtelmischung nach einem der Ansprüche 1, 2 oder 3, dadurch gekennzeichnet, dass von 0 bis 2 % Tonerdeschmelzzement zugemischt sind.

5. Mörtelmischung nach einem der vorhergehenden Ansprüche, dadurch gekennzeichnet, dass von 0,001 bis 0,05 % Verzögerer zugemischt sind.

6. Mörtelmischung nach einem der vorhergehenden Ansprüche, dadurch gekennzeichnet, dass 0,001 bis 0,01 % Antischaummittel zugemischt sind.

7. Mörtelmischung nach einem der vorhergehenden Ansprüche, dadurch gekennzeichnet, dass das Gewichtsverhältnis Zement /Anregersalz von 8 bis 12 beträgt.

8. Estrich hergestellt aus einer Mörtelmischung nach einem der vorhergehenden Ansprüche.

## Claims

1. A self-levelling mortar mixture containing a leaning agent, synthetic anhydrite, cement, calcium sulphate hemihydrate as a binder, seed salt, liquefier and water, characterized in that it contains up to 67 to 80 % of natural anhydrite with normal grain distribution from 0 mm and a maximum grain size between 0.8 and 1.8 mm as a leaning agent, and 10 to 20 % synthetic anhydrite, 4 to 7 % cement, 3 to 7 % α-calcium sulphate hemihydrate, 0.4 to 0.8 % potassium sulphate as seed salt, 0.01 to 0.2 % liquefier are provided and a ratio of water to solids of 0.13 to 0.2 is set, the weight ratio of cement to potassium sulphate amounting to 5 to 17.5 and the percentages representing percentages by weight and relating to the solids content.

2. A mortar mixture according to Claim 1, characterized in that the maximum grain size of the natural anhydrite amounts to 1.0 to 1.4 mm.

3. A mortar mixture according to one of Claims 1 or 2, characterized in that the synthetic anhydrite has a specific surface of 4,000 to 6,000 cm²/g.

4. A mortar mixture according to one of Claims 1, 2 or 3, characterized in that 0 to 2 % of aluminous cement is added.

5. A mortar mixture according to any of the preceding Claims, characterized in that 0.001 to 0.05 % of inhibitor is added.

6. A mortar mixture according to any of the preceding Claims, characterized in that 0.001 to 0.01 % of antifoaming agent is added.

7. A mortar mixture according to any of the preceding Claims, characterized in that the weight ratio of cement to seed salt amounts to 8 to 12.

8. A floor plaster produced from a mortar mixture according to any of the preceding Claims.

## Revendications

1. Mélange de mortier autonivelant contenant un agent amaigrissant, de l'anhydrite synthétique, du ciment, du sulfate de calcium hémihydraté en tant que liants, un sel activateur, un liquéfiant et de l'eau, caractérisé en ce qu'il contient de 67 à 80 % d'anhydrite naturelle d'une distribution granulométrique normale à partir de 0 mm et d'un grain maximal de 0,8 à 1,8 mm en tant qu'agent amaigrissant, avec 10 à 20 % d'anhydrite synthétique, 4 à 7 % de ciment, 3 à 7 % d'hémihydrate du sulfate de calcium a, 0,4 à 0,8 % de sulfate de potassium comme sel activateur, 0,01 à 0,2 % de liquéfiant, et est réglé à un rapport eau/matières solides de 0,13 à 0,2, le rapport pondéral ciment/sulfate de potassium est de 5 - 17,5 et les indications de % s'entendent en poids et se rapportant matières solides contenues.

2. Mélange de mortier selon la revendication 1, caractérisé en ce que le grain maximal de l'anhydrite naturelle est de 1,0 à 1,4 mm.

3. Mélange de mortier selon la revendication 1 ou 2, caractérisé en ce que l'anhydrite synthétique a une surface spécifique de 4 000 à 6 000 cm²/g.

4. Mélange de mortier selon la revendication 1, 2 ou 3, caractérisé en ce que l'on a mélangé 0 à 2 % en poids de ciment fondu d'alumine.

5. Mélange de mortier selon l'une des revendications qui précèdent, caractérisé en ce que l'on a mélangé de 0,001 à 0,05 % on poids d'un retardateur.

6. Mélange de mortier selon l'une des revendications qui précèdent, caractérisé en ce que l'on a mélangé de 0,001 à 0,01 % en poids d'un agent antimousse.

7. Mélange de mortier selon l'une des revendications qui précèdent, caractérisé en ce que les proportions relatives en poids ciment/sel activateur vont de 8 à 12.

8. Aire appliquée à l'aide d'un mélange de mortier selon l'une des revendications qui précèdent.